# EUROPÄISCHE PATENTSCHRIFT

(11) **EP 1 895 628 B1**
(45) Veröffentlichungstag und Bekanntmachung des Hinweises auf die Patenterteilung: **19.06.2013**
(21) Anmeldenummer: 06018200.3
(22) Anmeldetag: 31.08.2006
(51) Int. Cl.: H01S 3/042, H01S 3/04

(54) **Lasermodul**
Laser module
Module laser

(43) Veröffentlichungstag der Anmeldung: 05.03.2008
(73) Patentinhaber: Gesellschaft für Innovat. Industrieelektronik mbH, 83564 Soyen (DE)
(72) Erfinder: Kress, Ekkehard, 83512 Wasserburg (DE)
(74) Vertreter: Oberhardt, Knut

(56) Entgegenhaltungen:
- DE-C- 507 374
- JP-A- 7 099 352
- JP-A- 10 290 037
- US-A- 3 638 140
- US-A- 4 935 938
- US-A- 5 802 087
- US-A1- 2002 018 497

## Beschreibung

Die Erfindung betrifft ein Lasermodul nach dem Oberbegriff von Anspruch 1.

Lasermodule für unterschiedliche Anwendungszwecke, z. B. für medizinische Anwendungen aber auch in der Produktion, werden heute sehr kostspielig aufgebaut. Es entstehen so teuer zu montierende Lasermodule, die ziemlich groß bauen.

Hochleistungslaser produzieren einen enormen Anteil an Abwärme und werden daher üblicherweise mit Wasser gekühlt. Hierfür ist ein Vorratsbehälter zum Bereithalten einer genügend großen Wassermenge, eine Pumpe zum Zirkulieren des Kühlwassers und ein Wärmetauscher zum Abkühlen des heißen Kühlwassers erforderlich. Insbesondere der Hochleistungslaser und der Wärmetauscher werden üblicherweise mit größerem Abstand montiert und über lange Schläuche miteinander verbunden. Auch die Stromversorgung eines Hochleistungslasers setzt viel Wärme frei und muss daher gekühlt werden. Oft wird hierfür ein eigener Kühlkreislauf verwendet oder es wird eine zusätzliche Luftkühlung für die Stromversorgung aufgebaut.

JP 10 290037 A (HONDA MOTOR CO LTD) vom 27. Oktober 1998 offenbart ein Lasersystem mit modular aufgebautem Kühlmittelkreislauf, bei dem die einzelnen Kühlmittel führenden Teile über Rohrleitungen verbunden sind.

US 4 935 938 (GRESSLY ANDRE [CH] ET AL) vom 19. Juni 1990 offenbart eine Lasereinheit mit einem schwenkbaren Laserkopf, wobei koaxial zu der Schwenkachse gesteckte Verbindungen zwischen Kühlmittel führenden Rohren vorgesehen sind.

US 3 638 140 (KNAPP CHRISTOPHER F ET AL) vom 25. Januar 1972 offenbart ein kompaktes integriertes Laser-Kühler-System, bei dem in einem durchgehenden Gehäuse sowohl ein Laserresonator als auch ein geschlossener Kühlkreislauf zu dessen Kühlung untergebracht sind.

Dei Erfindung liegt die Aufgabe zugrunde, ein Lasermodul so aufzubauen, dass es preisgünstig und schnell montiert werden kann und dass die notwendigen Komponenten auf möglichst kleinem Bauraum untergebracht werden können.

Gelöst wird die Aufgabe durch ein Lasermodul mit den Merkmalen von Anspruch 1. Erfindungsgemäß sind die Kühlflüssigkeit führenden Komponenten über Steckverbindungen miteinander verbunden und kompakt angeordnet. Durch diese Maßnahmen wird eine hochgradige Integration des Lasermoduls möglich, da zwischen den Komponenten kein Platz für das Aufstecken von Schläuchen auf nach außen stehende Stutzen verbleiben muss. Ebenso wird kein zusätzlicher Raum für Schlauchklemmen und insbesondere für das Montieren von Schlauchklemmen benötigt. Auch die Montagezeit lässt sich auf diese Weise stark reduzieren. Die Abdichtung der gesteckten Verbindungen erfolgt erfindungsgemäß über O-Ringe.

In vorteilhafter Weise weisen die gesteckten Verbindungen zwischen den Kühlmittel führenden Teilen Rohre auf. Rohre stehen als Meterware in jedem beliebigen Durchmesser zur Verfügung und können daher äußerst prelswert für jede Verbindung angepasst werden.

Um zu verhindem das die gesteckten Verbindungen auseinanderrutschen und dadurch undicht werden, sind die in den Kühlmittelkreislauf integrierten Komponenten auch konstruktiv mit einander verbunden. So kann beispielweise ein Rahmen oder Halter vorgesehen sein, an dem die Komponenten befestigt werden, sobald die Verbindungen in einander gesteckt sind. Damit sind die Komponenten auch in ihrer Beweglichkeit zueinander gesichert.

Die Laserquelle weist laseraktives Material und eine Pumpquelle auf. Beide Komponenten der Laserkavität sind in einem Gehäuse untergebracht, das von dem Kühlmittel durchflossen wird. Die Laserkavität ist folglich vollkommen von dem Kühlmittel umströmt. Das Gehäuse der Laserkävität ist über gesteckte Verbindungen in den Kühlmittelkreislauf Integriert.

Das Lasermodul weist eine Träger- und Verteilerplatte auf. Auf dieser Platte können Komponenten des Lasermoduls angeordnet sein. Gleichzeitig ist das Pumpengehäuse in die Platte integnert. Daher fungiert die Platte auch als Verteiler für die Kühlflüssigkeit. Zu diesem Zweck sind Kanäle in die Platte eingearbeitet, die die Kühlflüssigkeit zu Anschlüssen leiten, an die wiederum die zu kühlenden Komponenten und der Wärmetauscher angeschlossen sind. Die Kühlmittelkanäle in der Platte können durch Tieflochbohrungen erzeugt werden. Diese Tieflochbohrungen werden von den Schmalseiten der Platte aus eingebracht, und dann über Verschlüsse wieder nach außen abgedichtet.

Vorteilhafterweise wird als Pumpe eine Kreiselpumpe verwendet, deren Stator gegen Flüssigkeit isoliert ist. Das Spiralgehäuse ist als Vertiefung direkt in die Platte eingebracht.

Der tangentiale Auslauf für das Kühlmittel geht in einen Kühlmittelkanal über, der ebenfalls direkt in die Platte eingebracht ist.

Von dem Pumpengehäuse führt eine zentrale Versorgungsbohrung für das Kühlmittel durch die Platte. Die Versorgungsbohrung ist mit einem Kühlmittelvorratsbehälter verbunden, der oberhalb der Platte angebracht ist.

Der Vorratsbehälter für das Kühlmittel liegt somit auf höherem Niveau als die Pumpe. Eine sichere Versorgung der Pumpe mit Kühlmittel ist dadurch immer gewährleistet. Besonders vorteilhaft ist der Vorratsbehälter direkt auf der Laserquelle angebracht. Durch den Kontakt mit der Oberseite des Gehäuses der Laserquelle ist die dichte Überleitung des Kühlmittels aus dem Vorratsbehälter in das Gehäuse der Laserquelle besonders einfach zu gestalten.

Um die Wärme aus dem Kühlmittelkreislauf wieder abführen zu können, ist ein Lüfter und ein Wasser-Luft-Wärmetauscher vorgesehen. Durch die Verwendung des Lüfters, der ständig für einen Luftaustausch in dem Wasser-luft-Wärmetauscher sorgt, kann der Wasser-Luft-Wärmetauscher kleiner dimensioniert werden. Dieser Wärmetauscher besteht vorteilhaft aus einer Kühlplatte und einem damit verbundenen Strangpressprofil aus Aluminium. In der Kühlplatte sind Kühlmittelkanäle eingebracht, so dass die Wärme aus der Kühlflüssigkeit möglichst schnell auf die Kühlplatte und von dort auf das Strangpressprofil übertragen werden kann. Die Kühlmittelkanäle können durch Fräsen erzeugt werden. Auf diese Weise kann auf der Unterseite der Kühlplatte in einem Arbeitsgang das komplette Leitungssystem erzeugt werden. Die offenen Kanäle werden danach vollständig mit der Träger- und Verteilerplatte abgedeckt und so nach außen abgedichtet. Die Abdeckung kann entweder verklebt oder mit einer Dichtung verschraubt werden. Bei diesem gefrästen Kühlkanalsystem ergibt sich ein geringer strömungswiderstand, da die einzelnen geraden Teilstücke des Kanalsystems über Rundungen miteinander in Verbindung stehen.

In einem Ausführungsbeispiel der Erfindung ist die Stromversorgung des Lasermoduls auf einem Kühlkörper aufgebaut, der ebenfalls eingearbeitete Kühlkanäle aufweist. Dies Kühlkanäle sind über gesteckte Verbindungen an die Kühlkanäle der Träger- und Verteilerplatte angeschlossen. Auf diese Weise ist die Kühlung der Stronversorgung direkt in den Kühlkreislauf des Lasermoduls integriert.

In einem weiteren Ausführungsbeispiel der Erfindung weist die Stromversorgung einen mit Kühlrippen bestückten Luftkühlkörper auf. Um eine ausreichende Kühlung der Stromversorgung gewährleisten zu können, ist ein Lüfter vorgesehen, so dass die Kühlrippen der Stromversorgung ständig von bewegter Luft überstrichen werden und die erwärmte Luft immer sofort abgeführt und durch frische kühlere Luft ersetzt wird.

Besonders vorteilhaft ist die Stromversorgung so platziert, dass die Kühlrippen direkt neben dem Wasser-Luft-Wärmetauscher im Luftstrom des gleichen Lüfters liegen. Dadurch kann, ohne dass dadurch Mehrkosten für einen zusätzlichen Lüfter verursacht werden, auf eine Flüssigkeitskühlung der Stromversorgung verzichtet werden.

Weitere Einzelheiten und Vorteile der Erfindung ergeben sich aus den Unteransprüchen im Zusammenhang mit der Beschreibung von Ausführungsbeispielen, die anhand der Zeichnung eingehend erläutert werden.

Es zeigt:
- Fig. 1: die Gesamtansicht eines erfindungsgemäßen Lasermoduls in einer ersten Ausführungsform,
- Fig. 2: eine weiteren Ausführungsform eines Lasermoduls,
- Fig. 3: einen Schnitt durch das Ausführungsbeispiel nach Fig. 2 entlang der Linie AA und
- Fig. 4: ein in der Ebene zwischen Wärmetauscher und Träger- und Verteilerplatte aufgeklapptes Modell des Ausführungsbeispiels nach Fig. 2.

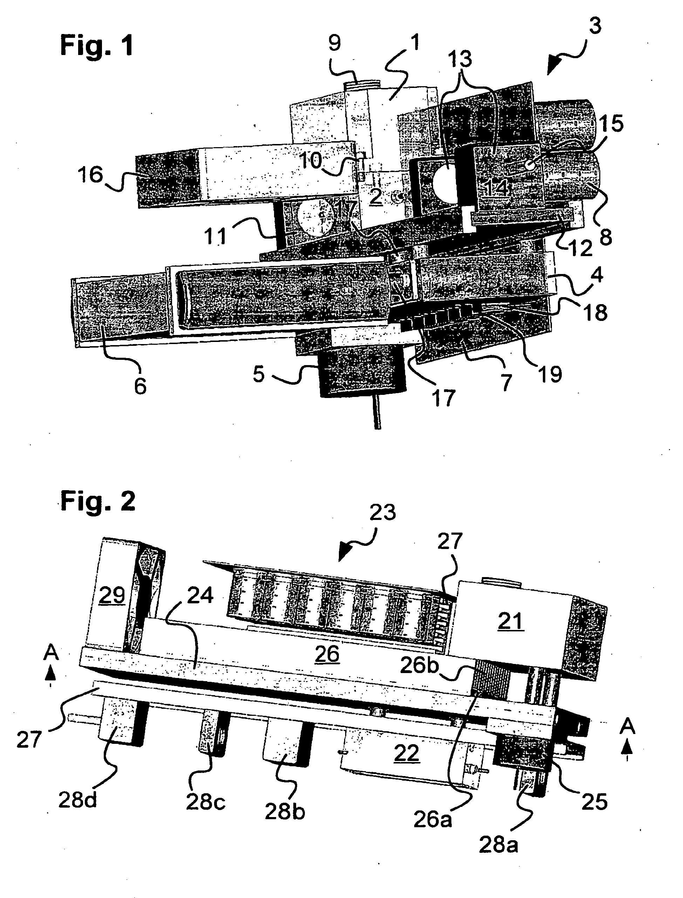

Das Ausführungsbeispiel nach Fig. 1 weist einen Kühlkreislauf auf, in den ein Wasservorratsbehälter 1, eine Laserquelle 2, eine Stromversorgung 3 für die Laserquelle 2, eine Träger- und Verteilerplatte 4 mit der Pumpe 5 und ein Wärmetauscher 6 integriert sind.

Die Stromversorgung 1 basiert auf einem Kühlkörper 7, der gleichzeitig als Grundplatte für den Aufbau dient. Auf diesem Kühlkörper 7 sind die elektrischen Komponenten 8 montiert. Auf diese Weise entsteht ein sehr kompakter Aufbau, der auch kurze Wege zwischen den einzelnen elektrischen Komponenten 8 gewährleistet.

Die Wärmeenergie wird von den Kondensatoren 8 der Stromversorgung 3 durch das Kühlmittel, in diesem Fall Wasser, abgeführt. Die in der Zeichnung nicht sichtbaren Kühlmittelkanäle sind direkt in die Oberfläche des Kühlkörpers 7 eingefräst. Die offenen Kanäle werden dann durch eine ebenfalls nicht sichtbare Abdeckplatte geschlossen, die in beliebiger Weise mit dem Kühlkörper 7 verbunden wird. Beispielsweise kann die Abdeckplatte über eine Dichtfolie mit dem Kühlkörper 7 verschraubt oder aber einfach mit ihm verklebt werden. Es muss in jedem Fall eine Verbindung entstehen, die die Dichtigkeit der eingearbeiteten Kühlmittelkanäle garantiert.

Der Wasservorratsbehälter 1 ist mit einer Nachfüllöffnung und einem Schraubverschluss 9 versehen. Kühlwasser, das durch Leckagen und Verdunstung aus dem Kühlkreislauf entwichen ist, kann so auf einfache Weise ersetzt werden.

Der Wasservorratsbehälter ist durch die Schrauben 10 direkt mit der Laserquelle 2 verbunden. Diese weist ein vollkommen mit Kühlwasser gefülltes Gehäuse 11 auf, in dem sich - hier nicht sichtbar - das laseraktive Material und die Pumpquelle befinden. Das Gehäuse 2 ist auf einer Platte 12 angeordnet, die auch die optischen Komponenten 13 trägt, die hier nur angedeutet sind. Als Beispiel ist auch ein Einkoppler 14 gezeigt, der den Laserstrahl in eine optische Faser 15 einkoppelt.

An der Träger- und Verteilerplatte 4 ist ein Großteil der Komponenten des Lasermoduls befestigt. Sie dient aber auch als Verteilerstation für das Kühlwasser. Zu diesem Zweck ist das Spiralgehäuse der Kreiselpumpe 5 in die Träger- und Verteilerplatte integriert, z. B. in die Platte eingefräst. Von hier aus bestehn Verbindungen zur Laserquelle 2, zu dem Wasser-Luft-Wärmetauscher 6 und zu der Stromversorgung 3. Gezeigt sind nur die Verbindungen zu der Laserquelle 2 und zu dem Wasser-Luft-Wärmetauscher 6.

Die Träger- und Verteilerplatte 4 kann aber zusätzlich noch Kühftunktion erfüllen. So sind Transistoren 18 der Stromversorgung 3 an der Unterseite der Träger- und Verteilerplatte 4 angebracht. Die Befestigung erfolgt mit Halteklammern 19, die einen innigen Kontakt mit der Unterseite der Träger- und Verteilerplatte 4 gewährleisten. Die Transistoren 18 werden durch wenigstens einen Kühlmittelkanal gekühlt, der sich unter den Transistoren 18 in der Träger- und Verteilerplatte 4 befindet.

Die Kühlmittelkanäle können in der Träger- und Vertellerplatte 4 ebenso wie in der Kühlplatte 7 der Stromversorgung 3 gefräst sein. Da hier nur eine einfache Kühlstruktur, im Wesentlichen aber eine Verteilerstruktur gefordert ist, bietet es sich an die Kühlmittelkanäle durch Tieflochbohrungen zu erzeugen, die von den Schmalseiten aus eingebracht werden. Die nicht benötigten Öffnungen werden dann wieder dicht verschlossen. Die Träger- und Verteilerplatte 4 kann je nach den benötigten Funktionen aus Kunststoff oder Metall, z. B. Aluminium bestehen.

Ein zu dem integrierten Pumpengehäuse tangential angeordneter Kühlmittelkanal führt zu einer Anschlussöffnung für den Wasser-Luft-Wärmetauscher 6. Der Kühlmittelkanal, der zu einem weiteren Anschluss des Wasser-Luft-Wärmetauschers 6 führt und abgekühltes Wasser von diesem in die Träger- und Verteilerplatte 4 zurückführt, teilt sich auf in einen Speisekanal für die Laserquelle 2 und einen Speisekanal für die Stromversorgung 3. Die Rückläufe dieser beiden Komponenten werden wieder vereinigt und über eine Zentralbohrung in dem eingefrästen Gehäuse der Pumpe 5 dieser wieder zugeführt.

Alle flüssigkeitsführenden Verbindungen zwischen den einzelnen Komponenten sind als Steckverbindungen ausgebildet. Sichtbar sind eine Vebindung zwischen Laserquelle 2 und Träger- und Verteilerplatte 12, sowie eine Verbindung zwischen dem Wasser-Luft-Wärmetauscher 6 und der Träger- und Verteilerplatte 12. Da diese Komponenten einen konstruktionsbedingten Abstand aufweisen, werden für die Flüssigkeitsführung zwischen den einzelnen Komponenten Rohre 17 verwendet. An ihren Enden sind die Rohre mit O-Ringen bestückt. Die Rohrenden werden in entsprechende Aufnahmeöffnungen der Komponenten gedrückt. Beispielsweise durch eine hier nicht gezeigte Rahmenkonstruktion werden die einzelnen Komponenten in ihrer Position nach dem Zusammenstecken fixiert. Es entstehen auf diese Weise einfach und preisgünstig zu montirende Verbindungen, die die notwendigen Erfordernisse an die Dichtheit des Systems erfüllen.

Das Lasermodul weist weiterhin einen Lüfter 16 auf. Dieser generiert einen Luftstrom, der über den Wasser-Luft-Wärmetauscher 6 streicht und somit für einen schnelleren Übergang der Wärme in die Umgebungsluft sorgt. Der Wasser-Luft-Wärmetauscher 6 kann auf diese Weise verhältnismäßig klein dimensioniert werden.

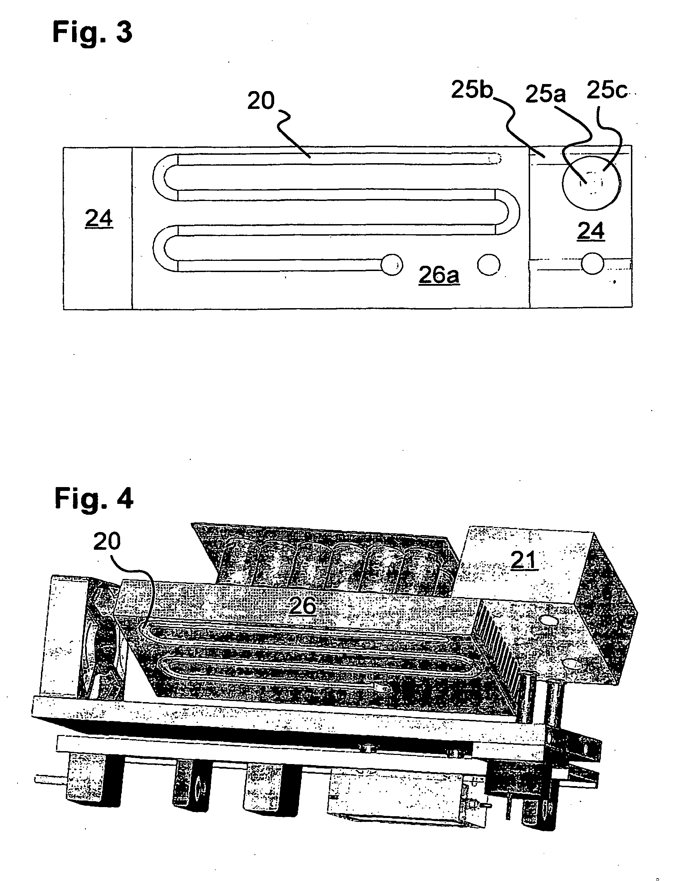

Das Lasermodul nach den Figuren 2-4 ist so konstruiert, dass es als Einschub aufgebaut werden kann. Der Kühlkreislauf umfasst hier eine Laserquelle 22, einen Wasservorratsbehälter 21 für die Laserquelle 22, eine Träger- und Verteilerplatte 24, sowie einen Wasser-Luft-Wärmetauscher 26. Die Stromversorgung 23 ist hier nicht flüssigkeitsgekühlt, sondern ist mit einem Luftwärmetauscher 27 verbunden.

Der Wasser-Luft-Wärmetauscher 26 ist aus einer Kühlplatte 26a und einem Strangpressprofil 26b aufgebaut. Beide Teile bestehen aus Aluminium und sind so miteinander verbunden, dass ein guter Wärmeübergang zwischen der Kühlplatte 26a und dem Strangpressprofil 26b stattfinden kann. Das Strangpressprofil 26b ist so beschaffen, dass es eine Vielzahl von Luftführungskanälen ausbildet.

In die Unterseite der Kohlplatte 26a Ist ein Kühlkanal 20 eingearbeitet. Dieser Kuhlkanalzieht sich schlingenförmig über die gesamte Fläche, so dass eine möglichst große Wärmemenge von der Kühlflüssigkeit auf die Kühlplatte 26a übertragen werden kann. Die Abdichtung des Kühlkanals 20 erfolgt über eine Träger- und Verteilerplatte 24. Die Träger-und Verteilerplatte 24 kann mit der Kühlplatte 26a verklebt oder über eine Dichtungsfolie mit dieser verschraubt sein. Auch in diese Träger- und Verteilerplatte 24 ist das Gehäuse 25c einer Pumpe 25 eingearbeitet.

Unterhalb des Wasser-Luft-Wärmetauscher 26 ist eine Platte 27 vorgesehen, an der die Laserquelle 22 und die optischen Komponenten 28 befestigt sind. In der Zeichnung sind ein Endspiegel 28a, ein Shutter 28b, ein teildurchlässiger Spiegel 28c und ein Einkoppler 28d gezeigt, der den Laserstrahl, wie in Fig. 1, in eine optische Faser einkoppelt.

Die Pumpe 25 saugt das Kühlwasser über eine zentrale Bohrung 25a aus dem Wasservorratsbehälter 21 an. Über einen zu dem Spiralgehäuse 25c der Pumpe 25 tangentialen Kanal 25b strömt das Kühlwasser in den Kühlkanal 20 in der Unterseite der Kühfplatte 26a. Von dort gelangt das Kühlwasser in die Laserquelle 22 und danach zurück in die Träger- und Verteilerplatte 24, von dort in den Wärmetauscher 26 und dann in den Wasservorratsbehälter 21.

Die flüssigkeitsführenden Verbindungen zwischen den einzelnen Komponenten sind genauso wie bei dem Ausführungsbeispiel nach Fig. 1 ausgeführt. Eine Ausnahme bildet hier lediglich die Verbindung zwischen dem Wasser-Luft-Wärmetauscher 26 und der Träger- und Verteilerplatte 24. Wie bereits weiter oben beschrieben, findet hier ein direkter Übergang statt, bei dem die Bauteile z. B. Ober eine gestanzte Dichtungsfolie mit den übereinander liegenden Kühlkanalaustritten aufeinander gepresst werden, so dass eine dichte Verbindung gewährleistet ist.

Der Lüfter 29 ist in dem Ausführungsbeispiel nach den Figuren 2-4 so angeordnet, dass nicht nur die Luftkanäle des Strangpressprofils 26b mit einem Luftstrom versorgt, sondern dass auch der Luftkühler 27 der Stromversorgung 23 in einem Luftstrom liegt. Auf diese Weise kann auf eine Flüssigkeitskühlung der Stromversorgung 23 verzichtet werden.

### Bezugszeichenliste :

- 1: Waservorratsbehälter
- 2: Laserquelle
- 3: Stromversorgung
- 4: Träger- und Verteilerplatte
- 5: Pumpe
- 6: Wasser-Luft-Wärmetauscher
- 7: Kühlkörper
- 8: elektrische Komponenten der Stromversorgung
- 9: Schraubverschluss
- 10: Schrauben
- 11: Gehäuse der Laserquelle
- 12: Platte
- 13: optische Komponenten
- 14: Einkoppler
- 15: optische Faser
- 16: Lüfter
- 17: Rohre
- 18: Transistoren
- 19: Halteklammem
- 20: Kühlkanal
- 21: Wasservorratsbehälter
- 22: Laserquelle
- 23: Stromversorgung
- 24: Träger- und Verteilerplatte
- 25: Pumpe
- 25a: zentrale Bohrung
- 25b: tangentialer Kanal
- 25c: Spiralgehäuse der Pumpe
- 26: Wasser-Luft-Wärmetauscher
- 26a: Kühlplatte
- 26b: Strangpressprofil
- 27: Platte
- 28: optische Komponenten
- 28a: Endspiegel
- 28b: Shutter
- 28c: teildurchlässiger Spiegel
- 28d: Einkoppler
- 29: Lüfter

## Patentansprüche

1. Lasermodul mit einer Laserquelle (2), einer Stromversorgung (3) und einer Kühleinrichtung, wobei die Kühleinrichtung einen Kühlmittelkreislauf mit einem Vorratsbehälter (1), einer Pumpe (5) und einem Wärmetauscher (6) aufweist, wobei alle diese einzelnen Komponenten eine kompakte Einheit bilden und alle einzelnen, Kühlmittel führenden Teile jeweils schlauchlos über gesteckte Verbindungen in den Kühlmittelkreislauf integriert sind.

2. Lasermodul nach Anspruch 1, **dadurch gekennzeichnet, dass** die gesteckten Verbindungen jeweils über O-Ringe abgedichtet sind.

3. Lasermodul nach Anspruch 2, **dadurch gekennzeichnet, dass** die gesteckten Verbindungen zwischen den Kühlmittel führenden Teilen Rohre (17) aufweisen.

4. Lasermodul nach Anspruch 1, **dadurch gekennzeichnet, dass** die gesteckten Verbindungen über die konstruktive Befestigung der einzelnen Komponenten gesichert sind.

5. Lasermodul nach Anspruch 1, **dadurch gekennzeichnet, dass** das Gehäuse der Pumpe (5) in eine Träger- und Verteilerplatte (4) integriert ist.

6. Lasermodul nach Anspruch 5, **dadurch gekennzeichnet, dass** ein Voratsbehälter (1) für Kühlmittel auf höherem Niveau als die Pumpe (5) angebracht ist.

7. Lasermodul nach Anspruch 6. **dadurch gekennzeichnet, dass** der Vorratsbehälter (1) di-rekt auf der Laserquelle (2) angebracht ist.

8. Lasermodul nach Anspruch 5, **dadurch gekennzeichnet, dass** ein Lüfter (16) und ein Wasser-Luft-Warmetauscher (6) vorgesehen ist.

9. Lasermodul nach Anspruch 8, **dadurch gekennzeichnet, dass** die Stromversorgung (23) durch einen Luftkühler (27) gekühlt wird.

10. Lasermodul nach Anspruch 9, **dadurch gekennzeichnet, dass** der Lüfter (29) den Wasser-Luft-Wärmetauscher (26) und den Luftkühler (27) gleichermaßen mit einem Luftstrom versorgt.

11. Lasermodul nach Anspruch 8, **dadurch gekennzeichnet, dass** der Wasser-Luft-Wärmetauscher (26) eine Kühlplatte (26a) und ein damit verbundenes luftdurchströmtes Aluminiumprofil (26b) aufweist.

12. Lasermodul nach Anspruch 11, **dadurch gekennzeichnet, dass** in die Kühlplatte (26a) of fene Kühlkanäle (20) eingearbeitet und diese Kühlkanäle (20) mit der Träger- und Verteilerplatte (24) abgedichtet sind.

## Claims

1. A laser module with a laser source (2), a power supply (3) and a cooling device, wherein the cooling device comprises a coolant circuit with a reservoir (1), a pump (5) and a heat exchanger (6), wherein all of these individual components form a compact unit and all individual coolant-conducting parts are integrated in the coolant circuit in a hose-less manner by means of plugged connections.

2. The laser module according to claim 1, **characterised in that** each of the plugged connections is sealed by means of O-rings.

3. The laser module according to claim 2, **characterised in that** the plugged connections between the coolant-conducting parts comprise tubes (17).

4. The laser module according to claim 1, **characterised in that** the plugged connections are secured by means of structural fixing of the individual components.

5. The laser module according to claim 1, **characterised in that** the housing of the pump (5) is integrated into a carrier and manifold plate (4).

6. The laser module according to claim 5, **characterised in that** a reservoir (1) for coolant is arranged at a level higher than the pump (5).

7. The laser module according to claim 6, **characterised in that** the reservoir (1) is directly arranged on the laser source (2).

8. The laser module according to claim 5, **characterised in that** a fan (16) and a water to air heat exchanger (6) are provided.

9. The laser module according to claim 8, **characterised in that** the power supply (23) is cooled by an air cooler (27).

10. The laser module according to claim 9, **characterised in that** the fan (29) uniformly supplies an air flow to the water to air heat exchanger (26) and the air cooler (27).

11. The laser module according to claim 8, **characterised in that** the water to air heat exchanger (26) comprises a cooling plate (26a) and, connected with it, an aluminium profile (26b) flown-through by air.

12. The laser module according to claim 11, **characterised in that** the cooling plate (26a) has open cooling channels (20) formed in it and these cooling channels (20) are sealingly covered by the carrier and manifold plate (24).

## Revendications

1. Module laser avec une source laser (2), une alimentation en courant électrique (3) et un dispositif de refroidissement, dans lequel le dispositif de refroidissement présente un circuit d'agent réfrigérant avec un réservoir de stockage (1), une pompe (5) et un échangeur thermique (6), dans lequel tous ces différents composants forment une unité compacte et toutes les différentes pièces conduisant l'agent réfrigérant sont à chaque fois intégrées dans le circuit d'agent réfrigérant sans tuyau au moyen de connexions.

2. Module laser selon la revendication 1, **caractérisé en ce que** les connexions sont à chaque fois rendues étanches au moyen d'anneaux toriques.

3. Module laser selon la revendication 2, **caractérisé en ce que** les connexions présentent des tubes (17) entre les pièces conduisant l'agent réfrigérant.

4. Module laser selon la revendication 1, **caractérisé en ce que** les connexions sont mises en sécurité par la fixation constructive des différents composants.

5. Module laser selon la revendication 1, **caractérisé en ce que** le boîtier de la pompe (5) est intégré dans une plaque support et distributrice (4).

6. Module laser selon la revendication 5, **caractérisé en ce qu'**un réservoir de stockage (1) pour agent réfrigérant est agencé à un niveau plus élevé que la pompe (5).

7. Module laser selon la revendication 6, **caractérisé en ce que** le réservoir de stockage (1) est agencé directement sur la source laser (2).

8. Module laser selon la revendication 5, **caractérisé en ce qu'**un ventilateur (16) et un échangeur thermique air eau (6) est prévu.

9. Module laser selon la revendication 8, **caractérisé en ce que** l'alimentation en courant électrique (23) est refroidie par un dispositif de refroidissement à air (27).

10. Module laser selon la revendication 9, **caractérisé en ce que** le ventilateur (29) alimente l'échangeur thermique air eau (26) et le dispositif de refroidissement à air (27) de la même manière avec un courant d'air.

11. Module laser selon la revendication 8, **caractérisé en ce que** l'échangeur thermique air eau (26) présente une plaque de refroidissement (26a) et un profilé d'aluminium (26b) relié avec, traversé par un écoulement d'air.

12. Module laser selon la revendication 11, **caractérisé en ce que** des canaux de refroidissement (20) ouverts sont intégrés dans la plaque de refroidissement (26a) et ces canaux de refroidissement (20) sont rendus étanches avec la plaque support et distributrice (24).
